Europäisches Patentamt

European Patent Office

Office européen des brevets

(11) Publication number: **0 260 738**
**A1**

# (12) EUROPEAN PATENT APPLICATION

(21) Application number: 87201625.8

(22) Date of filing: 28.08.87

(51) Int. Cl.⁴: **F16T 1/12**

(30) Priority: 19.09.86 IT 2314786 U

(43) Date of publication of application:
23.03.88 Bulletin 88/12

(84) Designated Contracting States:
AT BE CH DE ES FR GB GR IT LI LU NL SE

(71) Applicant: METAL WORK S.p.A.
Via Segni, 7
I-25062 Concesio (Brescia)(IT)

(72) Inventor: Fausto, Rodella
Via 8 Marzo, 7
I-25060 Collebeato (Brescia)(IT)
Inventor: Adriano, Albertini
Via Puglie, 22/A
I-25069 Villa Carcina (Brescia)(IT)

(74) Representative: Martegani, Franco et al
Ingg. GUZZI e RAVIZZA S.r.l. Via Boccaccio, 24
I-20123 Milano(IT)

(54) Improved device for discharging condensate in compressed air distribution systems.

(57) A device for discharging condensate in compressed air distribution systems, of the type comprising a valve seat (11) within which a valve (12) is axially movable against spring (25) pressure between an open position and a position closed against the said seat. Said valve is also rotatable by means of manual control (13), provision being made between the said valve and seat for cam means (29, 30, 31) which cause the axial moving of the said valve into the aforesaid closed position as a result of actuation of the said manual control (13).

Fig.1

EP 0 260 738 A1

# IMPROVED DEVICE FOR DISCHARGING CONDENSATE IN COMPRESSED AIR DISTRIBUTION SYSTEMS

The present invention relates to an improved device that can be applied to a compressed air distribution systems for the purpose of discharging the condensate which forms when humid air is compressed.

For such purpose devices are known comprising a discharge valve which, against spring pressure, opens spontaneously when there is zero pressure in the system.

If, at star-up, the pressure in the system does not increase at a sufficient rate owing to the small throughput of the compressor, devices of the aforesaid type tend to remain open.

In consequence, the discharge of the condensate in compressed air distribution system is frequently effected by means of simple manually controlled cocks, the operation of which is indipendent from the characteristics of the network pressure.

The object of the present invention is to obviate the problems of the known art by embodying a condensate discharge valve able to be selectively moved to a closed position, both spontaneously as a result of a sudden network pressure rise and manually by the operator.

To attain the said object, the invention embodies a device for discharging the condensate in compressed air distribution systems, of the type comprising a valve seat within which a valve is axially movable against spring pressure between an open position and a position closed against the said seat, wherein the said valve is also rotatable by means of a manual control, provision being made between the valve and the valve seat for cam means which cause the axial movement of the valve to the aforesaid closed position as a result of the actuation of the said manual control.

With the said cam means there cooperate retention means able to keep the valve stably in the closed position.

The manual control preferably comprises a handle fixed to one hand of the valve protruding from the valve seat.

The cam means preferably consist of a pair of radial teeth projecting from the valve and cooperating with respective circumferential cam profiles.

The said means for retaining the tooth on the cam consist preferably of recesses at the end of the said cam profiles, which the teeth engage.

The structural and functional characteristics of the invention, and its advantages over the known art, will become more apparent from an examination of the following description, referred to the appended drawings, which show an example of a device embodied according to the innovative principles of the invention.

In the drawings:
   -Figure 1 is partially evidenced longitudinal section illustrating the device in question in the open position for discharge of the condensate;
   -Figure 2 is a view as in Figure 1, illustrating the device in the closed position; and
   -Figure 3 is a section taken through the line III-III in Figure 2.

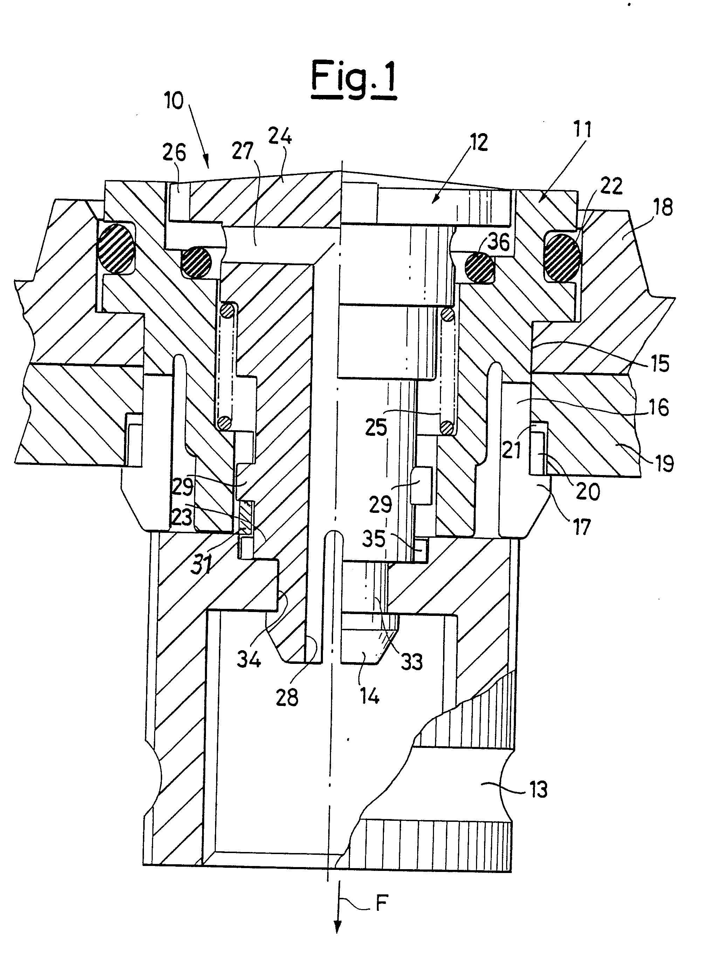

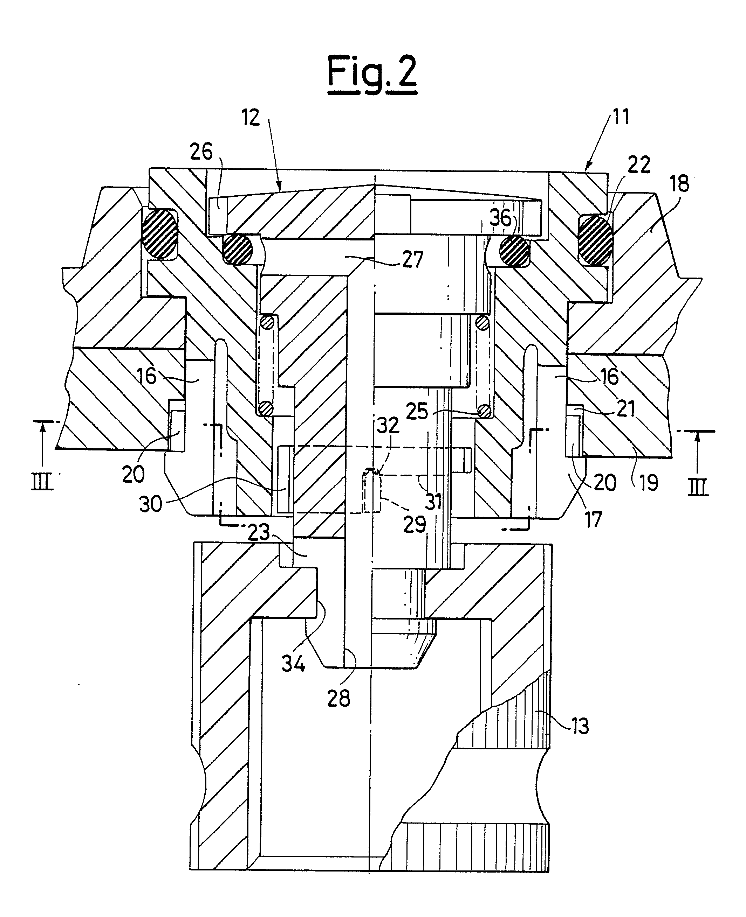

With reference to the drawings, the device in question is indicated overall by 10 and consists structurally of a valve seat 11, within which a valve is axially movable between two extreme open and closed position illustrated respectively in Figures 1 and 2 of the drawings. A handle 13 for the manual control of the valve 12 is secured solidly to the free end 14 of the valve 12 protruding from the seat 11.

More specifically, the seat 11 features externally an annular groove 15 formed of a skirting of elastically yieldable tongues 16 which each terminates in a latchingly engageable retaining tooth 17. In this way the seat 11 can be stably and latchingly engaged in the region of aligned openings in the body 18 of a standard condensate collection vessel and also in the support 19 for the entire complex.

Infact, as can be seen from the drawings, the body 18 and the support 19 are accepted by the groove 15 of the valve seat 11. The seat 11 is positively locked against rotation to the support 19 by means of tabs 20 solid with the tongues 16, which tabs 20 engage matching grooves 21 on the support 19. The numeral 22 indicates a seal gasket.

The valve 12 is essentially mushroom-shaped and comprises a tapered stem 23 and a head 24. Provision is made between the head 24 and the set 11 for a plurality of circumferential passageways 26 in the head 24. The valve 23 features a plurality of radial holes 27 which communicates - through the interior of the seat 11 - with the said passageways 26 and which all converge at one end of an axial hole 28. The hole 28 is also formed through the stem 23 and debouches within the hollow handle 13 to discharge externally the condensate coming from the collection vessel 18.

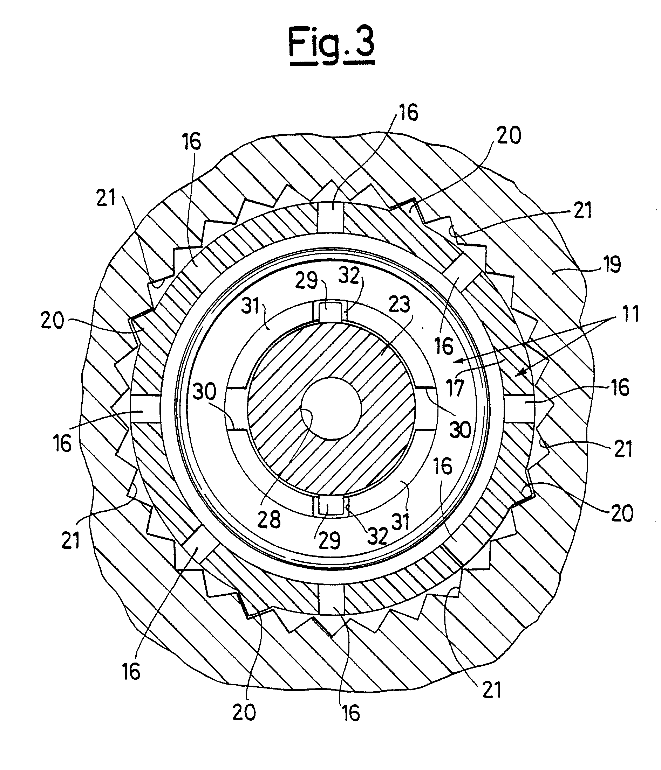

Within the seat 11 the valve 12 moves axially against the pressure of a return spring 25 which has two diametrically opposed radial teeth 29 engaging a respective circumferential cam guide comprising sections 30, 31 (Figures 2 and 3) and terminating in a recess 32 within which it is adapted to engage the respective tooth 29.

As mentioned heretofore, the handle 13 is secured to the free end of the stem 23 of the valve 12, which to such end features elastically yieldable sections with an annular hollow 33 within which there engages a collar 34 of the handle 13, which collar is locked against rotation to the valve 12 through the intermediary of a pair of diametrically opposed keys 35.

The device described above operates, briefly, as follows.

When network pressure is zero, the spring 25 mantains the valve 12 in the raised open position shown in Figure 1, and the condensate collected in the vessel 18 can be discharged externally through the passageways 26, 27, the hole 28 and the handle 13.

When network pressure increases suddenly, the pressure of the spring 25 is overcome and the valve 24 is lowered into the closed position shown in Figure 2 against the seal ring 36, with the result that any loss of air through the passageways 26, 27, the hole 18 and the handle 13 is prevented.

During the axial movement of the valve 11 between the positions shown in Figure 1 and 2, the diametrically opposed teeth 29 of the stem 23 move along the side 30 of the cam.

If it is wished to positively lock the valve 12 taken into the lowered closed position shown in Figure 2 by the pressure of the compressed air, it suffices simply to rotate the handle 13 manually in the direction causing the cam profile 31 to move over the teeth 29 until they engage the recesses 32. In this way, even when there is no network pressure, the valve 12 will be maintained in the said position.

On the other hand to take, in the absence of network pressure, the valve 12 from the open position of Figure 1 to the closed position of Figure 2, it is first necessary to exert traction to bear on the handle 13 in the direction shown by the arrow F and then to rotate the handle 13 in such a manner that the teeth 29 moves in succession over the cam sections 30,31 to engage the respective recesses 32.

Naturally, if the handle 13 in the direction opposite to that mentioned above, when the teeth 29 are in the region of the sides 30 of the cam, the spring 25 will return the valve 12 to the raised open position shown in the Figure 1, in which the condensate can be discharge.

When the handle 13 is rotated, the valve seat 11 is prevented from rotating by the engagement between the tongues 20 and the matching grooves 21.

The object mentioned in the introductory part of the description are therefore attained.

The device according to the present invention can in fact be used both in compressed air distribution system characterized by a usually sudden and appreciable increase in pressure whenever the system is activated, so that a spontaneous movement of the valve 12 from the open position of Figure 1 to the closed position of Figure 2 -against the pressure of the return spring 25-is assured, and also in system characterized by a gradual pressure increase; in this latter case the valve 12 can be moved manually to the closed position in the manner described heretofore.

The fact that all the components of the device are interconnected by freely disengageable latching engagements is also of great advantage.

**Claims**

1) Device for discharging condensate in compressed air distribution systems, of the type comprising a valve seat within which a valve is axially movable against spring pressure between an open position and a position closed against the said seat, wherein the said valve is also rotatable by means of manual control, provision being made between the said valve and seat for cam means which cause the axial moving of the said valve into the aforesaid closed position as a result of actuation of the said manual control.

2) Device as described in Claim 1, wherein cooperating with the said cam means are retaining means able to mantain the said valve stably in the closed position.

3) Device as described in Claim 1, wherein the said manual control comprises a handle fixed to one end of the said valve protuding from the said valve seat.

4) Device as described in Claim 1, wherein the said cam means consist of a pair of radial teeth projecting from the said valve and cooperating with respective circumferential cam profiles.

5) Device as described in Claim 2, wherein the said retaining means consist of recesses at the end of the said cam profiles, the said teeth engaging the said recesses.

6) Device as described in Claim 1, wherein the said valve and the said manual control are interconnected in a freely disengageable manner through the intermediary of latching engagement means and are mutually locked against rotation by fixing means.

7) Device as described in Claim 1, wherein the said valve seat is mounted on a condensate collection vessel and on an element supporting the device itself in a wholly disengageable manner through the intermediary of latching engagements, rotation of the said valve seat with respect to the said collection vessel and support element being blocked by fixing means.

# Fig.1

# Fig.2

# Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | DE-C- 184 326 (HÜBNER)<br>* Page 1, lines 50-66; page 2, lines 1-22,101-112; figures * | 1-5 | F 16 T 1/12 |
| Y | US-A-2 336 700 (PEPERSACK)<br>* Page 2, left-hand column, lines 4-33; figures * | 1-5 | |
| A | GB-A- 812 136 (WILKERSON)<br>* Page 2, line 75 - page 3, line 16; figures * | 1 | |
| A | GB-A- 491 486 (COCKBURNS) | | |

TECHNICAL FIELDS SEARCHED (Int. Cl.4)

F 16 T
F 16 K

The present search report has been drawn up for all claims

| Place of search | Date of completion of the search | Examiner |
|---|---|---|
| THE HAGUE | 18-12-1987 | VAN GHEEL J.U.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P0401)